# EUROPÄISCHE PATENTSCHRIFT

(11) **EP 2 864 652 B1**
(45) Veröffentlichungstag und Bekanntmachung des Hinweises auf die Patenterteilung: **11.07.2018**
(21) Anmeldenummer: 13722405.1
(22) Anmeldetag: 10.05.2013
(51) Int. Cl.: F16C 23/10

(54) **LAGERUNGSEINHEIT**
BEARING UNIT
ENSEMBLE PALIER

(30) Priorität: 26.06.2012 DE 102012105575
(43) Veröffentlichungstag der Anmeldung: 29.04.2015
(73) Patentinhaber: Adient Luxembourg Holding S.à r.l., 1855 Luxembourg (LU)
(72) Erfinder: GRIEWENKA, Norbert, 42699 Solingen (DE)
(74) Vertreter: Loock, Jan Pieter
(86) Internationale Anmeldenummer: PCT/EP2013/059746
(87) Internationale Veröffentlichungsnummer: WO 2014/000936

(56) Entgegenhaltungen:
- WO-A1-2012/072446
- DE-A1- 19 947 619
- DE-A1-102010 031 724
- DE-U1- 8 024 841
- US-A- 1 443 685

## Beschreibung

Die Erfindung betrifft eine Lagerungseinheit, mit
- einer äußeren Führungshülse, die eine Öffnung aufweist und
- einer rotierbar innerhalb der Öffnung der äußeren Führungshülse angeordneten inneren Aufnahmehülse mit einer Ausnehmung zur Aufnahme eines Befestigungsmittels, wobei
- eine Rotationsachse der inneren Aufnahmehülse in der äußeren Führungshülse und eine Mittelachse der Ausnehmung in der inneren Aufnahmehülse zur Aufnahme des Befestigungsmittels um eine Exzentrizität voneinander beabstandet sind, wobei
- zwischen der äußeren Führungshülse (2) und der inneren Aufnahmehülse (4) eine Vorrichtung zur kraft- und/oder formschlüssigen Lagesicherung einer eingestellten Position der Aufnahmehülse (4) relativ zur Führungshülse (2) vorgesehen ist.
Lagerungseinheiten der eingangs genannten Art sind in vielfältiger Ausgestaltung aus dem Stand der Technik bekannt, wie zum Beispiel aus der WO 2012/072446 A1, und werden zur Lagerung verschiedenster Bauelemente aneinander genutzt. Dabei wird typischerweise die äußere Führungshülse an einem ersten Bauelement angeordnet und das an dem ersten Bauelement zu lagernde zweite Bauelement mittels eines Befestigungsmittels an der inneren Aufnahmehülse befestigt.

Bei dem Aufbau komplexer Mechanismen aus zahlreichen Bauelementen kommt es aufgrund von Bautoleranzen typischerweise zu einem unerwünschten, aber unvermeidbaren Spiel zwischen den Bauelementen, was insbesondere bei Getrieben und anderen beweglichen Mechanismen unerwünscht ist, da dies zu einer erhöhten Abnutzung, ungenauem Betrieb und unerwünschter Geräuschentwicklung führt.

Mittels einer Lagerungseinheit der eingangs genannten Art, die eine Exzentrizität aufweist, kann ein solches Spiel nach Montage aller Bauelemente durch Verdrehen der inneren Aufnahmehülse in Bezug zur äußeren Führungshülse behoben werden. Nach dem Einstellen müssen dann die innere Aufnahmehülse und die äußere Führungshülse in Bezug zueinander fixiert werden, um eine weitere, unerwünschte Verstellung zu verhindern.

Zu diesem Zweck sind meist zusätzliche Befestigungsmittel zwischen der inneren Aufnahmehülse und der äußeren Führungshülse vorgesehen. Die Befestigung erfolgt dabei entweder stoffschlüssig, d.h. durch irreversibles Verbinden beider Hülsen, beispielsweise mittels eine Klebstoffes oder durch Verschweißen bzw. Verlöten beider Bauteile oder mittels mechanischer Lösungen zur irreversiblen Fixierung beider Hülsen in Bezug zueinander, bei denen ein weiteres Verstellen beispielsweise durch eine Deformation von Teilen der Hülsen verhindert wird. All diese Methoden haben zum Nachteil, dass bei einer irreversiblen Fixierung kein späteres Nachstellen eines erneut aufgetretenen Spiels mehr möglich ist.

Zusätzlich sind aus dem Stand der Technik hoch komplexe, reversible Mechanismen zur Fixierung beider Hülsen im Bezug zueinander bekannt, die aber den essentiellen Nachteil einer kostenintensiven Herstellung und eines zeitaufwändigen Einbaus und komplizierten Gebrauchs haben.

Ein weiterer Nachteil aller Lagerungsvorrichtungen des Stands der Technik besteht darin, dass das bei der Verstellung angewandte maximale Drehmoment sehr genau beachtet werden muss, um den Mechanismus, dessen Spiel mittels der verstellbaren Lagerungsvorrichtung eingestellt wird, nicht zu beschädigen. Daher sind dazu spezielle und somit teure Werkzeuge notwendig, wobei die Benutzung solcher Werkzeuge die Verstellung zusätzlich verkompliziert.

Der Erfindung liegt die Aufgabe zugrunde, eine Lagerungseinheit bereit zu stellen, mittels der die Position der Lagerung eines Befestigungsmittels in einfacher Weise und reproduzierbar angepasst werden kann, und die aus nur wenigen Bauteilen gebildet ist, so dass eine einfache und kostengünstige Montage möglich ist.

Die Aufgabe wird erfindungsgemäß durch eine Vorrichtung gemäß Anspruch 1 gelöst. Vorteilhafte Weiterbildungen der Erfindung sind in den abhängigen Ansprüchen angegeben.

Die erfindungsgemäße Lagerungseinheit umfasst eine äußere Führungshülse, die eine Öffnung aufweist und eine rotierbar innerhalb der Öffnung der äußeren Führungshülse angeordnete inneren Aufnahmehülse mit einer Ausnehmung zur Aufnahme eines Befestigungsmittels. Dabei sind eine Rotationsachse der inneren Aufnahmehülse in der äußeren Führungshülse und eine Mittelachse der Ausnehmung in der inneren Aufnahmehülse zur Aufnahme des Befestigungsmittels um eine Exzentrizität voneinander beabstandet. Zwischen der äußeren Führungshülse und der inneren Aufnahmehülse ist zusätzlich eine Vorrichtung zur kraft- und/oder formschlüssigen Lagesicherung einer eingestellten Position der Aufnahmehülse relativ zur Führungshülse angeordnet, um eine ungewollte Rotation der inneren Aufnahmehülse in der äußeren Führungshülse zu verhindern.

Aufgrund der Exzentrizität beider Rotationsachsen ist es in besonders einfacher Weise möglich, durch Rotation der Aufnahmehülse in der Führungshülse die Lage eines in der Ausnehmung der Aufnahmehülse angebrachten Befestigungsmittels relativ zur Führungshülse zu variieren. Der einfache Aufbau der Lagerungseinheit aus zwei Bauelementen stellt dabei eine einfache und kostengünstige Herstellung und Montage sicher. Aufgrund dieser Vorteile ist es beispielsweise in besonders einfacher Weise möglich, eine Zahnstange relativ zu einem Ritzel in einem Fahrzeugsitz, insbesondere eines Höheneinstellers eines Kraftfahrzeugsitzes, kostengünstig in Serie herzustellen und wiederholbar präzise auszurichten.

Grundsätzlich können die äußere Führungshülse und die innere Aufnahmehülse eine beliebige Form aufweisen und aus einem beliebigen Material gebildet sein. Bevorzugt sind sie aus einem Material mit einer hohen Festigkeit und einem geringen Gewicht, beispielsweise einem Leichtmetall, Aluminium, einem Kunststoff oder einem Verbundwerkstoff gebildet, wodurch das Gesamtgewicht der Lagerungsvorrichtung in vorteilhafter Weise gering gehalten werden kann.

Die äußere Führungshülse und/oder die innere Aufnahmehülse können dabei aus einem einzigen Bauteil oder mehreren beliebig miteinander verbundenen Bauteilen bestehen, wobei die äußere Führungshülse und/oder die innere Aufnahmehülse bevorzugt aus einem einzigen Bauteil besteht, wodurch in vorteilhafter Weise eine kostengünstige und einfache Herstellung und Montage möglich sind.

Auch ist es denkbar, dass die äußere Führungshülse nicht nur die innere Aufnahmehülse aufnimmt, sondern daneben weitere Funktionen erfüllt. Ebenso kann auch die innere Aufnahmehülse eine über die Aufnahme eines Befestigungsmittels und Rotierbarkeit innerhalb der Öffnung der äußeren Führungshülse hinausgehende Funktion erfüllen.

Die äußere Führungshülse weist eine Öffnung auf, die bevorzugt im Wesentlichen rund ist, so dass die darin angeordnete innere Aufnahmehülse in der Öffnung drehbar ist. Besonders bevorzugt ist dabei die Öffnung zu wenigstens einer Fläche der äußeren Führungshülse orthogonal angeordnet und ganz besonders bevorzugt befindet sich die Öffnung orthogonal zu zwei parallelen Außenflächen der äußeren Führungshülse, so dass die Öffnung eine zylindrische Form aufweist. Weiterhin durchdringt die Öffnung bevorzugt die äußere Führungshülse dabei vollständig. Grundsätzlich kann das Verhältnis des Durchmessers der Öffnung zur Dicke der äußeren Führungshülse entlang der Öffnung beliebig gewählt sein, bevorzugt ist dieses Verhältnis größer 1, besonders bevorzugt größer 2.

Die innere Aufnahmehülse weist zumindest in einem Abschnitt der Außenfläche eine der Öffnung in der äußeren Führungshülse angepasste Form auf. Bevorzugt handelt es sich dabei um eine zylindrische Form, die einen geringeren Radius als die Öffnung der äußeren Führungshülse aufweist und die somit in dieser Öffnung angeordnet werden kann. Besonders bevorzugt ist der zylindrische Abschnitt im Wesentlichen genauso lang wie die Öffnung in der äußeren Führungshülse tief ist.

Die innere Aufnahmehülse weist eine Ausnehmung auf, die bevorzugt die innere Aufnahmehülse vollständig durchdringt. Der Durchmesser der Ausnehmung der inneren Aufnahmehülse ist dabei bevorzugt kleiner als der Durchmesser des zylindrischen Abschnitts. Grundsätzlich ist allerdings auch denkbar, dass die Ausnehmung die innere Aufnahmehülse nicht vollständig durchdringt und dabei der Durchmesser der Ausnehmung größer ist als der Durchmesser des zylindrischen Abschnitts. Auch gleiche Durchmesser sind möglich.

Die Rotationsachse der inneren Aufnahmehülse in der äußeren Führungshülse ist definiert als die Achse, die durch den Mittelpunkt der Öffnung der äußeren Führungshülse und orthogonal zu einer Stirnfläche der Öffnung verläuft, wobei die innere Aufnahmehülse in der äußeren Führungshülse um die Rotationsachse drehbar ist. Bevorzugt verläuft die Rotationsachse dabei entlang einer Normalen einer im Wesentlichen kreisrunden Stirnfläche des zylindrischen Abschnitts der inneren Aufnahmehülse und zeitgleich durch den Mittelpunkt dieser Stirnfläche.

Die Mittelachse der Ausnehmung in der inneren Aufnahmehülse ist definiert als die Achse, die durch den Mittelpunkt der Ausnehmung und entlang einer Normalen der bevorzugt im Wesentlichen kreisrunden Fläche der Ausnehmung verläuft.
Dabei verlaufen die Rotationsachse und die Mittelachse parallel zueinander, wobei beide Achsen voneinander beabstandet sind. Der Abstand beider Achsen ist definiert als die Exzentrizität der beiden Achsen bzw. der inneren Aufnahmehülse.
Die Exzentrizität kann dabei beliebig groß sein, bevorzugt ist sie allerdings kleiner als der halbe Radius der Ausnehmung, besonders bevorzugt kleiner als ein Viertel des Radius der Ausnehmung. Die Größe der Exzentrizität ist dabei bestimmend für die maximale Verstellbarkeit des innerhalb der Ausnehmung der inneren Aufnahmehülse angeordneten Befestigungsmittels in Bezug zu der äußeren Führungshülse bzw. einem Bauelement, an dem diese angeordnet ist.

Bei dem Befestigungsmittel kann es sich um eine beliebige Vorrichtung zur Befestigung handeln, beispielsweise um eine Mutter, einen Stift, einen Splint, eine Achse, eine Gewindestange, eine Schraube oder einen Bolzen.

Gemäß der Erfindung ist die Vorrichtung zur kraft- und/oder formschlüssigen Lagesicherung eine Vorrichtung zur Verrastung der inneren Aufnahmehülse in Bezug zur äußeren Führungshülse, die bevorzugt an den Kontaktflächen der inneren Aufnahmehülse und/oder äußeren Führungshülse im Bereich der Öffnung angeordnet ist. Erfindungsgemäß ist die Vorrichtung zur Verrastung durch eine Verzahnung der Kontaktfläche der inneren Aufnahmehülse und/oder äußeren Führungshülse gebildet, wodurch in einfacher Weise eine selbsthemmende Wirkung der Vorrichtung zur Verrastung erreicht wird. Ganz besonders bevorzugt ist die Verzahnung derart ausgestaltet, dass die Drehbewegung in eine Vorzugsrichtung erleichtert ist. Dazu ist eine verrundete Verzahnung vorgesehen, wobei zur Ausbildung einer Vorzugsrichtung der Radius der Verrundung wenigstens einer der Verzahnungen entlang einer Drehrichtung deutlich größer ist als in der anderen Drehrichtung. Denkbar ist auch die Anordnung einer verrundeten Kerbverzahnung auf wenigstens einem der verzahnten Bauelemente. Erfindungsgemäß ist die Verzahnung aus einem elastischen Material gebildet und deformiert während der Verdrehung der inneren Aufnahmehülse in Bezug zur äußeren Führungshülse elastisch, wobei bevorzugt ein benötigtes Moment zur Überwindung des Zahneingriffs deutlich über einem Reibmoment zwischen der inneren Aufnahmehülse und der äußeren Führungshülsen während des Betriebs liegt. Hierdurch wird vorteilhaft im Betrieb der Lagerungseinheit eine Selbsthemmung der Verstellbarkeit der inneren Aufnahmehülse in der äußeren Führungshülse gewährleistet, während die Ausrichtung der inneren Aufnahmehülse in der äußeren Führungshülse in besonders einfacher Weise und äußerst effizient erfolgen kann. Erfindungsgemäß sind die innere Aufnahmehülse und/oder die äußere Führungshülse wenigstens teilweise, bevorzugt vollständig aus Kunststoff gebildet, wobei es sich besonders bevorzugt um einem elastischen Kunststoff mit hoher Festigkeit handelt, beispielsweise Polyethylen, Polypropylen oder Polyacetat. Gemäß einer weiteren vorteilhaften Weiterbildung der Erfindung ist das Kunststoffmaterial der innere Aufnahmehülse und/oder der äußere Führungshülse zusätzlich faserverstärkt.

Nach einer vorteilhaften Weiterbildung der Erfindung sind die Ausnehmung der inneren Aufnahmehülse und/oder die Öffnung der äußeren Führungshülse im Wesentlichen rund, wobei besonders bevorzugt der Durchmesser der Ausnehmung dem Durchmesser des darin aufzunehmenden Befestigungsmittels im Wesentlichen entspricht, wodurch das Befestigungsmittel in besonders einfacher Weise innerhalb der Ausnehmung angeordnet und fixiert werden kann.

Weiterhin bevorzugt ragt die in der Öffnung der äußeren Führungshülse angeordnete innere Aufnahmehülse zu einer oder beiden Seiten aus der Öffnung der äußeren Führungshülse heraus.

Nach einer bevorzugten Weiterbildung der Erfindung weist die innere Aufnahmehülse einen Flansch auf, der bevorzugt im montierten Zustand der inneren Aufnahmehülse wenigstens mit einer Fläche gegen die äußere Führungshülse abgestützt ist, wobei die Fläche bevorzugt orthogonal zur der Rotationsachse der inneren Aufnahmehülse angeordnet ist und ganz besonders bevorzugt im Bereich der Öffnung der äußeren Führungshülse vollständig flach verläuft. Hierdurch kann in einfacher Weise eine feste Positionierung der inneren Aufnahmehülse in der Öffnung der äußeren Führungshülse erreicht und eine einfacher und kostengünstige Montage der Lagerungsvorrichtung gewährleistet werden.

Nach einer besonders bevorzugten Weiterbildung der Erfindung erstreckt sich jeweils ein Teil der innere Aufnahmehülse beidseitig über den Flansch hinaus, wobei bevorzugt der eine dieser beiden Teile bis zu dem Flansch in die Öffnung der äußeren Führungshülse geschoben ist und besonders bevorzugt von dieser vollständig aufgenommen wird, ohne dabei aus der zur anderen, dem Flansch abgewandten Seite der Öffnung heraus zu ragen.

Gemäß einer besonders vorteilhaften Ausgestaltung der Erfindung ist der Flansch wenigstens in einem Bereich als ein Betätigungsbereich ausgeformt, der bevorzugt mittels eines Werkzeugs, insbesondere eines Sechskantschlüssels greifbar ist, womit die gesamte innere Aufnahmehülse in der äußeren Führungshülse gedreht werden kann, um die Position des in der Ausnehmung der inneren Aufnahmehülse angeordneten Befestigungsmittels in einfacher Weise relativ zur äußeren Führungshülse zu variieren.

Gemäß einer ganz besonders bevorzugten Ausgestaltung der Erfindung ist der Betätigungsbereich derart gebildet, dass ab einem definierten, auf den Betätigungsbereich wirkenden Drehmoment dieser elastisch deformiert, wodurch ein Werkzeug, mit dem die innere Aufnahmehülse gedreht wird, an dem Betätigungsbereich definiert abrutscht und somit reproduzierbar eine Verstellung der inneren Aufnahmehülse in besonders einfacher Weise mit im Wesentlichen gleichbleibendem Drehmoment erreicht wird. Dies ist insbesondere bei einer in Serienfertigung hergestellten Vorrichtung vorteilhaft, da es dabei zu jeweils einem leicht abweichenden Spiel der Baukomponenten kommt und durch die elastische Deformation des Betätigungsbereichs das aufbringbare Drehmoment wiederholbar begrenzt wird, wodurch eine gleichbleibende Einstellung innerhalb einer Bauserie in besonders einfacher Weise gewährleistet ist.

Gemäß einer vorteilhaften Weiterbildung der Erfindung weist die äußere Führungshülse einen Bereich zum Kontakt mit oder zur Befestigung an einem weiteren Bauelement auf, der bevorzugt als eine ebene Fläche ausgebildet ist.

Ein Ausführungsbeispiel der Erfindung wird nachstehend mit Bezug auf die Zeichnungen näher erläutert. In den Figuren zeigen:
- Fig. 1: eine perspektivische Ansicht einer Ausführungsform einer Lagerungseinheit, umfassend eine äußere Führungshülse und eine innere Aufnahmehülse;
- Fig. 2: eine schematische Ansicht der in Fig. 1 abgebildeten Ausführungsform der äußeren Führungshülse;

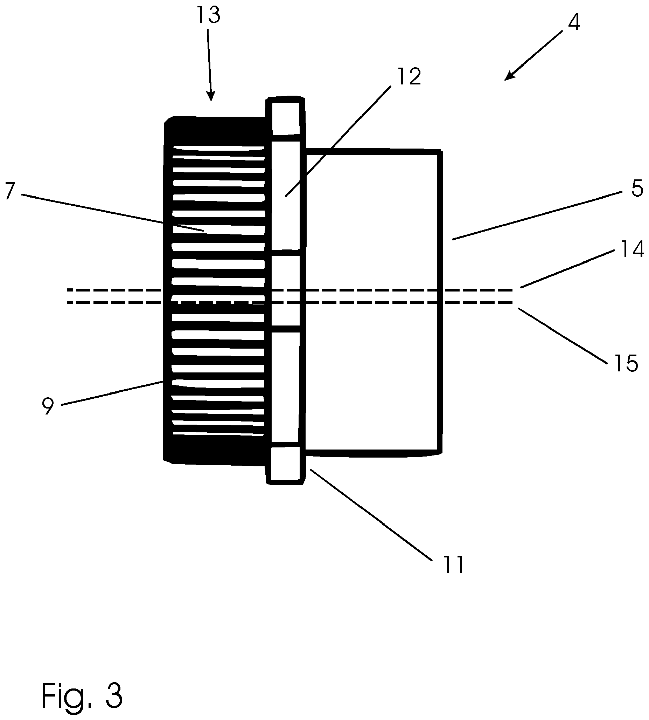

- Fig. 3: eine schematische Ansicht der in Fig. 1 abgebildeten Ausführungsform der inneren Aufnahmehülse;
- Fig. 4: eine gegenüber Fig. 3 um 90° gedrehte Ansicht der Ausführungsform mit Blickrichtung in eine Ausnehmung der inneren Aufnahmehülse und
- Fig. 5: eine detaillierte schematische Ansicht von Verzahnungen der äußeren Führungshülse und der inneren Aufnahmehülse der in Fig. 1 abgebildeten Ausführungsform.

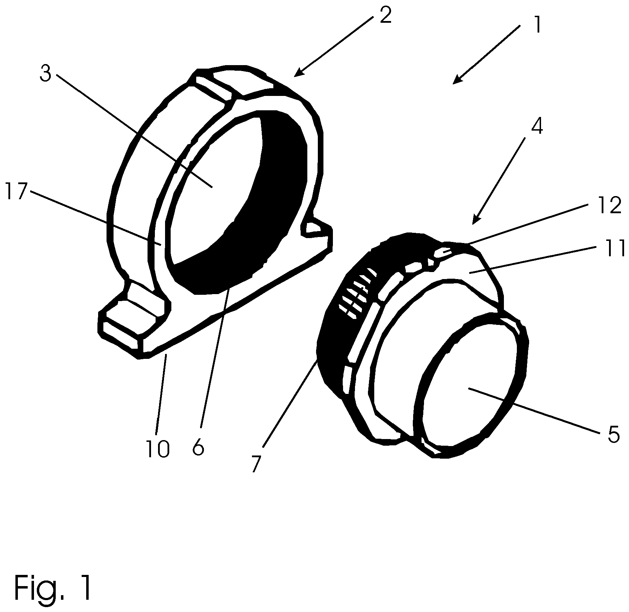

Eine in Fig. 1 dargestellte Ausführungsform einer Lagerungsvorrichtung 1 umfasst eine äußere Führungshülse 2 und eine innere Aufnahmehülse 4, die beide vollständig aus einem elastischen Kunststoff hoher Festigkeit, beispielsweise PE-HD, gebildet sind.

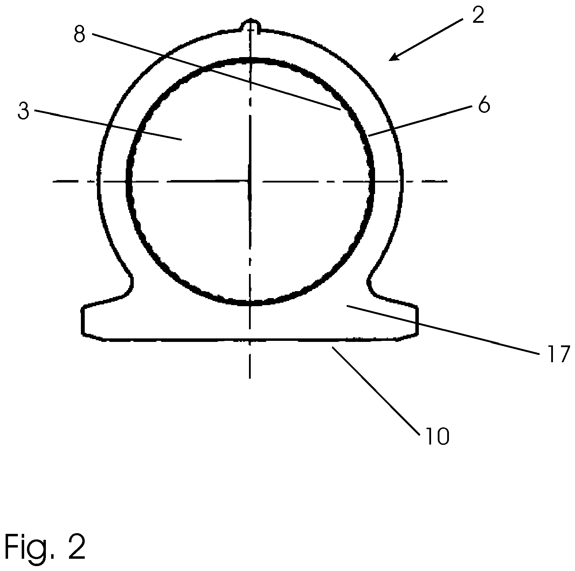

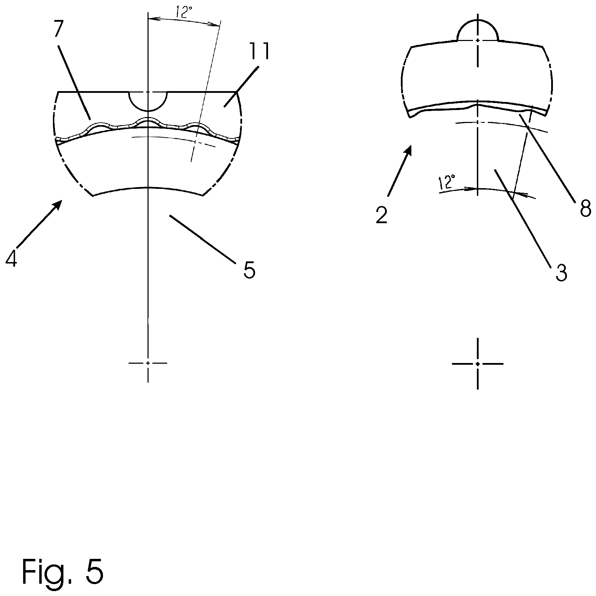

Die äußere Führungshülse 2 weist dabei eine kreisrunde Öffnung 3 in einer ebenen Stirnfläche 17 sowie einen orthogonal zur Stirnfläche 17 angeordneten, flachen Bereich zur Befestigung 10 an einem weiteren Bauteil auf. Die gewölbte seitliche Wandung der Öffnung 3 bildet eine äußere Kontaktfläche 6, die mit einer Verzahnung 8 versehen ist (vgl. Fig. 2 und Fig. 5), wobei die Verzahnung 8 asymmetrisch gestaltet ist, so dass sich eine Verzugsrichtung ergibt, in der die Verzahnung 8 eine geringere Steigung aufweist als in einer entgegengesetzten Richtung.

Die innere Aufnahmehülse 4 besitzt einen Abschnitt mit einer außenliegenden, zylinderförmigen Kontaktfläche 7, deren Radius geringfügig kleiner ist als der Radius der Öffnung 3 der äußeren Führungshülse 2. Die Außenseite dies zylinderförmigen Abschnitts 13 der inneren Aufnahmehülse 4 ist ebenfalls mit einer Verzahnung 9 auf der Oberfläche versehen (vgl. Fig. 5), die an die Verzahnung 8 der äußeren Führungshülse 2 angepasst ist, wobei die Verzahnung 8 der inneren Aufnahmehülse 4 verrundet und entlang beiden möglichen Drehrichtungen symmetrisch gestaltet ist.

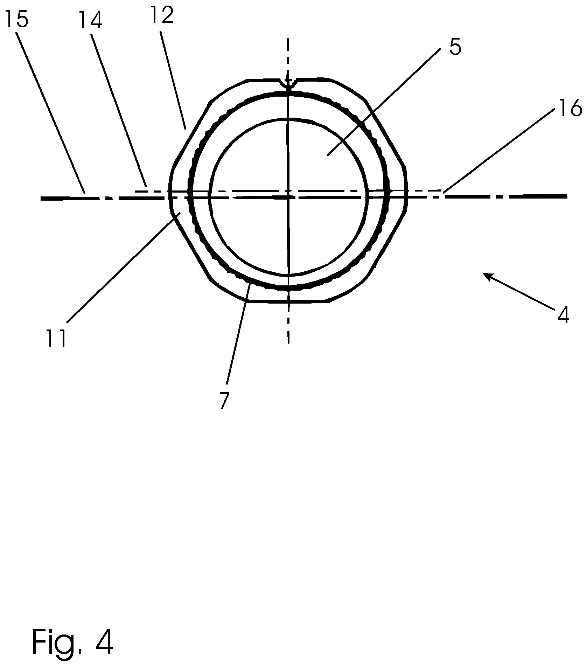

Angrenzend an den zylinderförmigen Abschnitt 13 der inneren Aufnahmehülse 4 ist ein Flansch 11 angeordnet, dessen äußerste Kante als Betätigungsbereich 12 derart ausgebildet ist, dass dieser mittels eines Sechskantschlüssels gegriffen werden kann (Fig. 4). Auf der dem zylinderförmigen Abschnitt 13 gegenüberliegenden Seite des Flansches 11 erstreckt sich ein weiterer Teil der inneren Aufnahmehülse 4, der eine kreisrunde Ausnehmung 5 zur Aufnahme eines Bolzens aufweist.

Im montierten Zustand der Lagerungsvorrichtung ist der zylinderförmige Abschnitt 13 der inneren Aufnahmehülse 4 bis zum Kontakt des Flansches 11 mit der Stirnfläche 17 der äußeren Führungshülse 2 in die Öffnung 3 der äußeren Führungshülse 2 geschoben. Dabei kann mittels eines Sechskantschlüssels die innere Aufnahmehülse 4 an dem Betätigungsbereich 12 des Flansches 11 gegriffen und gedreht werden, wobei die äußere Verzahnung 8 auf der Kontaktfläche 6 der Öffnung 3 der äußeren Führungshülse 2 und die innere Verzahnung 9 auf der Kontaktfläche 7 des zylinderförmigen Abschnitts 13 der inneren Aufnahmehülse 4 elastisch deformiert, so dass bei einem definierten Drehmoment sich die Position der inneren Aufnahmehülse 4 in der Öffnung 2 der äußeren Führungshülse 2 um eine Zahnposition der im Kontakt stehenden Verzahnungen 8,9 verändert.

Die Drehung der inneren Aufnahmehülse 4 innerhalb der Öffnung 3 der äußeren Führungshülse 2 erfolgt um eine Rotationsachse 14, die durch den Mittelpunkt des zylinderförmigen Abschnitts 13 der inneren Führungshülse 4 sowie auch durch den Mittelpunkt der Öffnung 3 der äußeren Führungshülse 2 verläuft. Diese Rotationsachse 14 ist um eine Exzentrizität 16 von einer Mittelachse 15 der Ausnehmung 5 der inneren Aufnahmehülse 4 beabstandet, wobei die Mittelachse 15 durch den Mittelpunkt der Ausnehmung 5 und zeitgleich parallel zur Rotationsachse 14 der inneren Aufnahmehülse 4 verläuft.

Durch diese Anordnung wird durch eine Drehung der inneren Aufnahmehülse 4 ein in der Ausnehmung 5 angeordneter Bolzen in Bezug zu der äußeren Führungshülse 2 nicht nur rotiert, sondern auch entlang einer kreisförmigen Bahn in seiner Position verändert. Auf diese Weise ist es beispielsweise möglich, eine Zahnstange relativ zu einem Ritzel in einem Fahrzeugsitz, insbesondere eines Höheneinstellers eines Kraftfahrzeugsitzes, präzise auszurichten.

Um eine übermäßige Belastung der Lagerungsvorrichtung 1 und damit verbundener Bauteile beim Verdrehen der inneren Aufnahmehülse 4 innerhalb der Öffnung 3 der äußeren Führungshülse 2 zu vermeiden, sind das Material und die Form des Betätigungsbereichs 12 des Flansches 11 an der inneren Aufnahmehülse 4 derart gewählt, dass ein daran angreifendes Werkzeug bei Überschreitung eines vordefinierten Drehmomentes aufgrund einer elastischen Deformation des Materials den Halt verliert. Hierdurch wird eine Wiederholbarkeit der Einstellung über das aufbringbare Drehmoment, was aufgrund der Verformung des Betätigungsbereichs 12 begrenzt ist, insbesondere bei einem seriengefertigten Bauelement umfassend die Lagerungseinheit 1 gewährleistet.

### Bezugszeichenliste

- 1: Lagerungseinheit
- 2: äußere Führungshülse
- 3: Öffnung
- 4: innere Aufnahmehülse
- 5: Ausnehmung
- 6: äußere Kontaktfläche
- 7: innere Kontaktfläche
- 8: äußere Verzahnung
- 9: innere Verzahnung
- 10: Bereich zur Befestigung
- 11: Flansch
- 12: Betätigungsbereich
- 13: zylinderförmiger Abschnitt
- 14: Rotationsachse
- 15: Mittelachse
- 16: Exzentrizität
- 17: Stirnfläche

## Patentansprüche

1. Lagerungseinheit (1), mit
- einer äußeren Führungshülse (2), die eine Öffnung (3) aufweist und
- einer rotierbar innerhalb der Öffnung (3) der äußeren Führungshülse (2) angeordneten inneren Aufnahmehülse (4) mit einer Ausnehmung (5) zur Aufnahme eines Befestigungsmittels, wobei
- eine Rotationsachse (14) der inneren Aufnahmehülse (4) in der äußeren Führungshülse (2) und eine Mittelachse (15) der Ausnehmung (5) in der inneren Aufnahmehülse (4) zur Aufnahme des Befestigungsmittels um eine Exzentrizität (16) voneinander beabstandet sind,
wobei
- zwischen der äußeren Führungshülse (2) und der inneren Aufnahmehülse (4) eine Vorrichtung zur kraft- und/oder formschlüssigen Lagesicherung einer eingestellten Position der Aufnahmehülse (4) relativ zur Führungshülse (2) vorgesehen ist,
wobei die Vorrichtung zur kraft- und/oder formschlüssigen Lagesicherung aus einer Vorrichtung zur Verrastung der inneren Aufnahmehülse (4) in Bezug zur äußeren Führungshülse (2) gebildet ist, wobei die Vorrichtung zur Verrastung durch eine Verzahnung (8, 9) der Kontaktfläche (6, 7) der inneren Aufnahmehülse (4) und/oder äußeren Führungshülse (2) gebildet ist. **dadurch gekennzeichnet, dass** die Verzahnung (8, 9) aus einem elastischen Material gebildet ist und während der Verdrehung der inneren Aufnahmehülse (4) in Bezug zur äußeren Führungshülse(2) elastisch deformiert, wobei bevorzugt ein benötigtes Moment zur Überwindung des Zahneingriffs deutlich über einem Reibmoment zwischen der inneren Aufnahmehülse (4) und der äußeren Führungshülsen (2) während des Betriebs liegt, wobei die innere Aufnahmehülse (4) und/oder die äußere Führungshülse (2) wenigstens teilweise, bevorzugt vollständig aus einem elastischen Kunststoff mit hoher Festigkeit gebildet sind.

2. Lagerungseinheit nach Anspruch 1, **dadurch gekennzeichnet, dass** Vorrichtung zur Verrastung bevorzugt an den Kontaktflächen (6, 7) der inneren Aufnahmehülse (4) und/oder äußeren Führungshülse (2) im Bereich der Öffnung (3) angeordnet ist.

3. Lagerungseinheit nach einem der vorhergehenden Ansprüche, **dadurch gekennzeichnet, dass** die Ausnehmung (5) der inneren Aufnahmehülse (4) und/oder die Öffnung (3) der äußeren Führungshülse (2) im Wesentlichen rund sind, wobei bevorzugt der Durchmesser der Ausnehmung (5) im Wesentlichen dem Durchmesser des darin aufzunehmenden Befestigungsmittels entspricht.

4. Lagerungseinheit nach einem oder mehreren der vorhergehenden Ansprüche, **dadurch gekennzeichnet, dass** die in der Öffnung (3) der äußeren Führungshülse (2) angeordnete innere Aufnahmehülse (4) zu einer oder beiden Seiten aus der Öffnung (3) der äußeren Führungshülse (4) herausragt.

5. Lagerungseinheit nach einem oder mehreren der vorhergehenden Ansprüche, **dadurch gekennzeichnet, dass** die innere Aufnahmehülse (4) einen Flansch (11) aufweist, der bevorzugt im montierten Zustand der inneren Aufnahmehülse (4) wenigstens mit einer Fläche gegen die äußere Führungshülse (2) abgestützt ist, wobei die Fläche bevorzugt orthogonal zur der Rotationsachse (14) der inneren Aufnahmehülse (4) angeordnet ist.

6. Lagerungseinheit nach Anspruch 5, **dadurch gekennzeichnet, dass** sich jeweils ein Teil der innere Aufnahmehülse (4) beidseitig über den Flansch (11) hinaus erstreckt, wobei bevorzugt der eine dieser beiden Teile (13) bis zu dem Flansch (11) in die Öffnung (3) der äußeren Führungshülse (2) geschoben ist und besonders bevorzugt von dieser vollständig aufgenommen wird ohne dabei aus der zur anderen, dem Flansch (11) abgewandten Seite der Öffnung (3) heraus zu ragen.

7. Lagerungseinheit nach einem der Ansprüche 5 oder 6, **dadurch gekennzeichnet, dass** der Flansch (11) wenigstens in einem Bereich als ein Betätigungsbereich (12) ausgeformt ist, der bevorzugt mittels eines Werkzeugs, insbesondere eines Sechskantschlüssels greifbar ist, womit die gesamte innere Aufnahmehülse (4) in der äußeren Führungshülse (2) gedreht werden kann.

8. Lagerungseinheit nach Anspruch 7, **dadurch gekennzeichnet, dass** der Betätigungsbereich (12) derart gebildet ist, dass ab einem definierten, auf den Betätigungsbereich (12) wirkenden Drehmoment dieser elastisch deformiert.

## Claims

1. Bearing unit (1), having
- an outer guide sleeve (2) which has an opening (3), and
- an inner receiving sleeve (4) which is arranged rotatably within the opening (3) of the outer guide sleeve (2) and has a recess (5) for receiving a fastening means,
- a rotational axis (14) of the inner receiving sleeve (4) in the outer guide sleeve (2) and a centre axis (15) of the recess (5) in the inner receiving sleeve (4) for receiving the fastening means being spaced apart from one another by an eccentricity (16),
- an apparatus for non-positive and/or positively locking positional securing of a set position of the receiving sleeve (4) relative to the guide sleeve (2) being provided between the outer guide sleeve (2) and the inner receiving sleeve (4),
the apparatus for non-positive and/or positively locking positional securing being formed from an apparatus for latching the inner receiving sleeve (4) in relation to the outer guide sleeve (2), the apparatus for latching being formed by way of a toothing system (8, 9) of the contact face (6, 7) of the inner receiving sleeve (4) and/or outer guide sleeve (2), **characterized in that** the toothing system (8, 9) is formed from an elastic material and deforms elastically during the rotation of the inner receiving sleeve (4) in relation to the outer guide sleeve (2), a required torque for overcoming the tooth engagement preferably lying considerably above a frictional moment between the inner receiving sleeve (4) and the outer guide sleeve (2) during operation, the inner receiving sleeve (4) and/or the outer guide sleeve (2) being formed at least partially, preferably completely from an elastic plastic with a high strength.

2. Bearing unit according to Claim 1, **characterized in that** the apparatus for latching is preferably arranged on the contact faces (6, 7) of the inner receiving sleeve (4) and/or outer guide sleeve (2) in the region of the opening (3).

3. Bearing unit according to either of the preceding claims, **characterized in that** the recess (5) of the inner receiving sleeve (4) and/or the opening (3) of the outer guide sleeve (2) are/is substantially round, the diameter of the recess (5) preferably corresponding substantially to the diameter of the fastening means which is to be received therein.

4. Bearing unit according to one or more of the preceding claims, **characterized in that** the inner receiving sleeve (4) which is arranged in the opening (3) of the outer guide sleeve (2) protrudes out of the opening (3) of the outer guide sleeve (4) on one or both sides.

5. Bearing unit according to one or more of the preceding claims, **characterized in that** the inner receiving sleeve (4) has a flange (11) which, preferably in the mounted state of the inner receiving sleeve (4), is supported at least by way of one face against the outer guide sleeve (2), the face preferably being arranged orthogonally with respect to the rotational axis (14) of the inner receiving sleeve (4).

6. Bearing unit according to Claim 5, **characterized in that** a part of the inner receiving sleeve (4) extends in each case on both sides beyond the flange (11), one of the said two parts (13) preferably being pushed as far as the flange (11) into the opening (3) of the outer guide sleeve (2) and particularly preferably being received completely by the latter, without protruding out of that other side of the opening (3) which faces away from the flange (11).

7. Bearing unit according to either of Claims 5 and 6, **characterized in that** the flange (11) is shaped at least in one region as an actuating region (12) which can preferably be gripped by means of a tool, in particular a hexagon key, by way of which the entire inner receiving sleeve (4) can be rotated in the outer guide sleeve (2).

8. Bearing unit according to Claim 7, **characterized in that** the actuating region (12) is formed in such a way that the said actuating region deforms elastically above a defined torque which acts on the actuating region (12).

## Revendications

1. Unité de palier (1), comprenant
- une douille de guidage extérieure (2) qui présente une ouverture (3) et
- une douille de réception intérieure (4) disposée de manière à pouvoir tourner à l'intérieur de l'ouverture (3) de la douille de guidage extérieure (2), comprenant un évidement (5) pour recevoir un moyen de fixation,
- un axe de rotation (14) de la douille de réception intérieure (4) dans la douille de guidage extérieure (2) et un axe médian (15) de l'évidement (5) dans la douille de réception intérieure (4), pour recevoir le moyen de fixation, étant espacés l'un de l'autre d'une excentricité (16),
- un dispositif pour fixer en position par engagement par force et/ou par correspondance de formes une position ajustée de la douille de réception (4) par rapport à la douille de guidage (2) étant prévu entre la douille de guidage extérieure (2) et la douille de réception intérieure (4),
le dispositif de fixation en position par engagement par force et/ou par correspondance de formes étant formé d'un dispositif d'encliquetage de la douille de réception intérieure (4) par rapport à la douille de guidage extérieure (2), le dispositif d'encliquetage étant formé en vue de l'encliquetage par une denture (8, 9) de la surface de contact (6, 7) de la douille de réception intérieure (4) et/ou de la douille de réception extérieure (2), **caractérisée en ce que** la denture (8, 9) est formée d'un matériau élastique et, pendant la rotation de la douille de réception intérieure (4) par rapport à la douille de guidage extérieure (2), est déformée élastiquement, de préférence un couple nécessaire pour surmonter l'engagement des dents étant nettement au-dessus d'un couple de friction entre la douille de réception intérieure (4) et la douille de réception extérieure (2) pendant le fonctionnement, la douille de réception intérieure (4) et/ou la douille de guidage extérieure (2) étant formées au moins en partie, et de préférence complètement, d'un plastique élastique de grande résistance.

2. Unité de palier selon la revendication 1, **caractérisée en ce que** le dispositif d'encliquetage est disposé de préférence sur les surfaces de contact (6, 7) de la douille de réception intérieure (4) et/ou de la douille de guidage extérieure (2) dans la région de l'ouverture (3).

3. Unité de palier selon l'une quelconque des revendications précédentes, **caractérisée en ce que** l'évidement (5) de la douille de réception intérieure (4) et/ou l'ouverture (3) de la douille de guidage extérieure (2) sont essentiellement ronds, le diamètre de l'évidement (5) correspondant essentiellement au diamètre du moyen de fixation devant être reçu à l'intérieur de celui-ci.

4. Unité de palier selon l'une quelconque ou plusieurs des revendications précédentes, **caractérisée en ce que** la douille de réception intérieure (4) disposée dans l'ouverture (3) de la douille de guidage extérieure (2) fait saillie d'un côté ou des deux côtés hors de l'ouverture (3) de la douille de guidage extérieure (4).

5. Unité de palier selon l'une quelconque ou plusieurs des revendications précédentes, **caractérisée en ce que** la douille de réception intérieure (4) présente une bride (11) qui est supportée de préférence dans l'état monté de la douille de réception intérieure (4) au moins avec une surface contre la douille de guidage extérieure (2), la surface étant disposée de préférence perpendiculairement à l'axe de rotation (14) de la douille de réception intérieure (4).

6. Unité de palier selon la revendication 5, **caractérisée en ce qu'**une partie de la douille de réception intérieure (4) s'étend à chaque fois des deux côtés au-delà de la bride (11), l'une de ces deux parties (13) étant de préférence enfoncée jusqu'à la bride (11) dans l'ouverture (3) de la douille de guidage extérieure (2) et, de manière particulièrement préférée, étant reçue complètement par celle-ci, sans pour autant faire saillie hors de l'autre côté de l'ouverture (3) opposé à la bride (11).

7. Unité de palier selon l'une quelconque des revendications 5 ou 6,
**caractérisée en ce que** la bride (11) est formée au moins dans une région sous forme de région d'actionnement (12) qui peut être saisie de préférence au moyen d'un outil, en particulier d'une clé hexagonale, avec laquelle l'ensemble de la douille de réception intérieure (4) peut être tourné dans la douille de guidage extérieure (2).

8. Unité de palier selon la revendication 7, **caractérisée en ce que** la région d'actionnement (12) est réalisée de telle sorte qu'à partir d'un couple de rotation défini agissant sur la région d'actionnement (12), celle-ci se déforme élastiquement.
